# EUROPEAN PATENT APPLICATION

(11) **EP 1 837 154 A2**
(43) Date of publication of application: **26.09.2007**
(21) Application number: 07251275.9
(22) Date of filing: 26.03.2007
(51) Int. Cl.: B29C 47/00, B29C 44/20, E06B 9/04

(54) **Shutters**

(30) Priority: 24.03.2006 GB 0605923
(71) Applicant: Simply Shutters Limited, Unit 2A Station Way Brandon Suffolk IP27 0BH (GB)
(72) Inventor: Millar, Paul James c/o Simply Shutters Ltd., Brandon Suffolk IP27 OBH (GB)
(74) Representative: Wightman, David Alexander

(57) **Abstract**

A shutter 2 for door or window comprises a rectangular frame 4 having stiles 6,8 and rails 10,12 and blades 14 cut to length from extruded profiles of blown polymer. The polymer comprises a mixture of two grades of polystyrene of different hardness to provide desired properties of strength and durability. A preferred polymer material comprises approximately 95% by weight of a blended mixture of crystal polystyrene and high impact polystyrene in a ratio 70:30 to 60:40.

## Description

This invention concerns improvements in or relating to shutters for closures such as doors and windows.

Windows are commonly provided with external shutters providing decorative and/or functional and/or security features. For example shutters may be provided that are movable between an open position allowing passage of light and/or air to the window and a closed position overlying the window and restricting passage of light and/or air to the window. The shutters may be mounted for hinging or sliding movement between the open and closed positions and may be secured in the closed position to restrict unauthorised access to the window, for example to prevent a thief gaining entry through the window.

External shutters for windows are traditionally made of timber in a range of styles, for example a solid panel or louvers or a combination of both. External louver shutters typically comprise a rectangular frame having opposed vertical parallel stiles connected by opposed horizontal upper and lower rails and a plurality of vertically spaced horizontal blades extending between the stiles. The space between the blades provides for passage of air for ventilation when the shutters are in the closed position.

Timber shutters require regular maintenance including painting or other surface treatment to maintain an attractive appearance and to withstand the effects of sun, wind, rain, snow and ice. This is time consuming and adds to costs. Furthermore, the timber eventually rots and the shutter has to be replaced further adding to costs.

Timber shutters are also prone to warp due to exposure to wide ranges of temperatures and humidity and this can prevent the shutters closing properly with the result that it may not be possible to secure the shutters I the closed position thereby compromising security.

It has been proposed to construct external shutters for windows from plastics materials. These have the advantage compared to timber shutters that they do not rot. Plastics materials are generally more expensive than timber and plastic shutters of comparable cost to timber shutters are typically of relatively lightweight construction and are only suitable for decorative and functional purposes. Plastic shutters of heavier construction capable of providing security when closed are known but these are usually more expensive than comparable timber shutters. The known plastic shutters can also be susceptible to warp under extremes of temperature making it difficult to secure the shutters in the closed position.

The present invention has been made from a consideration of the foregoing problems and disadvantages of the known timber and plastic shutters.

According to a first aspect of the present invention, we provide a shutter for a closure such as a door or window, wherein the shutter is made of a blown (expanded) polymer.

The blown polymer may form profile shapes of uniform cross-section from which component parts of the shutter can be cut to length for assembly of shutters of different size. For example, profile shapes may be produced by extrusion.

Preferably, the shutter is made of extruded blown polystyrene although other polymers or mixtures of polymers may be used. In a preferred embodiment, the extruded blown polystyrene comprises a mixture of two or more grades of polystyrene to provide the required properties of hardness, strength, and durability.

Preferably, the blown polystyrene comprises a mixture of crystal polystyrene (also known as general purpose polystyrene) and high impact polystyrene. The crystal polystyrene imparts hardness but is brittle and the high impact polystyrene reduces brittleness and imparts durability to the shutter. Preferably, the high impact polystyrene content is lower than the crystal polystyrene content. For example the high impact polystyrene may comprise from 30 to 40 % by weight of the total amount of blown polystyrene and the crystal polystyrene may comprise from 70 to 60 % by weight of the total amount of blown polystyrene.

Preferably, the shutter comprises at least 80%, preferably at least 90% and more preferably approximately 95% by weight of blown polystyrene. Preferably, the ratio of high impact polystyrene to crystal polystyrene is in the range from 30:70 to 40:60 of the total amount of blown polystyrene and the specific gravity of the resultant blown polystyrene is in the range 0.30 to 0.85.

Preferably, but not exclusively, the blown polystyrene includes a colouring agent, for example a dye. In this way, shutters can be produced having any desired colour by incorporating the appropriate colouring agent in the blown polymer. This has the advantage that the resulting profile has a uniform colour throughout and can be cut to length and joined for assembly of the shutter without exposing any part of different colour.

Alternatively or additionally, the shutters can be painted. Thus, in some instances, for example where the shutters are to match a colour scheme, shutters can be produced in a neutral colour and painted to suit requirements. We have found that blown polystyrene is a material that is easily painted and will "hold" the painted coat(s) much longer than ordinary timber shutters thereby reducing the need for regular maintenance.

Preferably, the shutter comprises a frame of generally rectangular shape and a plurality of louver blades extending between opposed stiles of the frame. The frame and blades may be made of the same or different blown polymers having the same or different colours. For example, the frame may be made of denser material than the blades to resist warping. The blades may be made of a different colour to the frame and/or the shutter may have blades of the same or different colours.

Preferably, the ends of the blades are located and secured in slots in the inner side edge of the stiles. The slots may be configured to match the profile of the blades and are preferably angled so that the blades extend downwards from an upper rear edge to a lower front edge. Preferably, the rear edge has a rounded profile and the front edge has a square profile and projects from the frame. Alternatively, the front edge may have a rounded profile and be substantially flush with the front edge, i.e. does not project from the frame.

Preferably, component parts of the shutter are secured together by a bonding agent such as an adhesive. The adhesive may be a liquid form of the polymer from which the component parts are made. For example we may employ a liquid form of styrene where the shutter is made of blown polystyrene.

According to a second aspect of the present invention, we provide a method of constructing a shutter for a closure such as a door or window, comprising forming at least one profile of required shape from a blown polymer.

Preferably the blown polymer is blown polystyrene and more preferably a mixture of two or more grades of blown polystyrene, for example two grades of different hardness such as crystal polystyrene and high impact polystyrene.

According to a third aspect of the present invention, we provide a shutter for a closure such as a door or window, the shutter comprising a frame of generally rectangular shape with a pair of opposed stiles connected by a pair of opposed rails and a plurality of blades extending between the stiles, wherein the frame and blades are made of blown polymer.

Preferably, the ends of the blades are received and secured in slots in the stiles.

Preferably, component parts of the shutter are secured together by a bonding agent such as an adhesive. The adhesive may be a liquid form of the polymer from which the component parts are made. For example we may employ a liquid form of styrene where the shutter is made of blown polystyrene.

In one arrangement, the blades are wider than the stiles such that the blades project from the slots forwardly from the frame. In a preferred embodiment, each blade has a rounded rear edge and an angular front edge.

In another arrangement, the blades are substantially the same width as the stiles such that blades are contained within the frame, i.e. do not project from the frame. In a preferred embodiment, each blade has a rounded front edge and an angular or rounded rear edge.

Preferably, the slots are configured so that the portion of the blade received in the slot is a close fit. This provides a neat and attractive finish when the blades are secured in the slots.

The invention will now be described in more detail by way of example only, with reference to the accompanying drawings wherein:-
**Figure 1** is a perspective view of a shutter embodying the invention;
**Figure 2** is a side view, to an enlarged scale, of a stile of the shutter shown in Figure 1;
**Figure 3** is a section on the line A-A of Figure 2; and
**Figure 4** is a section, to an enlarged scale, through a louver blade of the shutter shown in Figure1.

Referring to the accompanying drawings, a shutter 2 for a closure such as door or window is shown and comprises a frame 4 of rectangular shape having opposed vertical stiles 6,8 connected by upper and lower horizontal rails 10,12 and a plurality of vertically spaced horizontal blades 14 extending between the stiles 6,8. It will be understood that the terms "vertical" and "horizontal" refer to the orientation of the shutter 2 in its normal position of use.

The stiles 6,8 and rails 10,12 and blades 14 are cut to length from extruded profiles of blown polymer. In this embodiment, the blown polymer comprises a mixture of two grades of polystyrene of different hardness - namely crystal polystyrene and high impact polystyrene where the crystal polystyrene is harder than the high impact polystyrene. The ratio of the two grades is controlled to provide the components of the shutter with desired properties of strength and durability.

We have found that a blended mixture in which the ratio of high impact polystyrene to crystal polystyrene is in the range 30:70 to 40:60 of the total amount of polystyrene produces a material that is sufficiently strong to resist warping when exposed to extremes of temperature and humidity and is of low specific gravity - typically 0.30 to 0.85 - such that shutters of large size can still be handled relatively easily for installation and in use.

A preferred polymer material comprises approximately 95% by weight of a blended mixture of crystal and high impact polystyrene with approximately 1 to 2% of a blowing agent and approximately 3% of a colouring agent. The presence of the colouring agent in the polymer material produces extruded profiles of uniform colour throughout the section of the profile enabling components to be cut to length and assembled without revealing surfaces of different colour.

Shutters can be made having any desired colour, for example black, white, green or any other colour to suit the choice and preference of the customer. The frame and shutters may be of the same or different colours and/or the blades may be of the same or different colours. The polymer material may also include a UV stabiliser to maintain integrity and colour stability of the shutter when exposed to UV.

As shown the stiles 6,8 and rails 10,12 are cut to length from extruded profiles of rectangular section. The profile forming the stiles 6,8 is wider than that forming the rails 10,12 enabling slots 16 to be machined in the ends of the stiles 6,8 to receive the ends of the rails 10,12 which can be secured in the slots 16 with a bonding agent such as a polymer/solvent based adhesive cement applied to all touching areas of the profiles. We prefer to use a liquid form of the styrene itself as the bonding agent as it has been found the resulting bond is stronger than the material itself. It will be understood that other bonding agents and/or methods of joining the stiles 6,8 and rails 10,12 to construct the frame 4 may be employed.

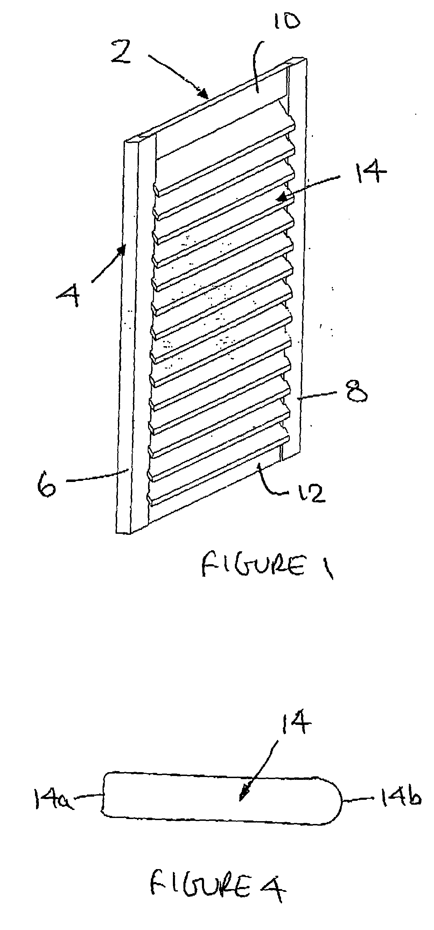

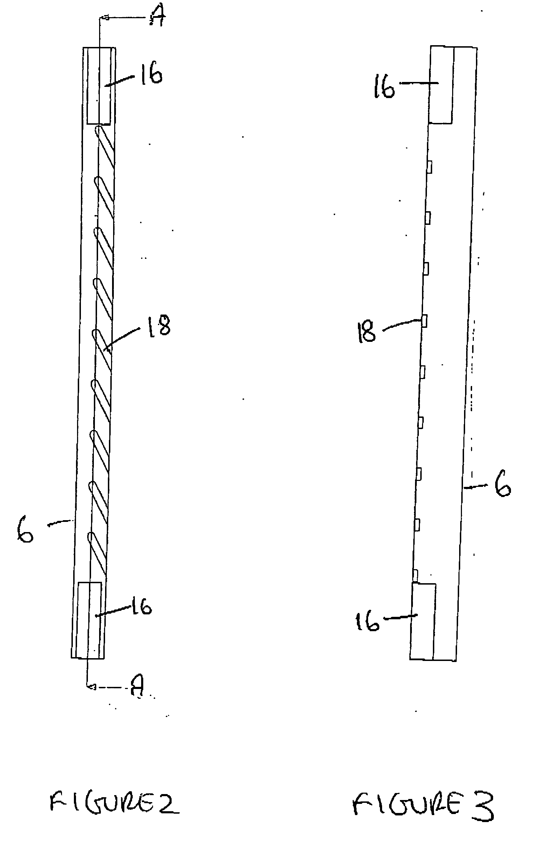

As best shown in Figure 2, each stile 6,8 is provided with a plurality of slots 18 in the inner side edge face that extend from the front, in use, face of the shutter 2 and terminate within the section. The slots 18 are inclined relative to a front, in use, face of the shutter 2 so that the blades 14 are angled downwards from a rear edge to a front edge that projects forwardly of the front face of the shutter 2 as shown in Figure 1.

As best shown in Figure 4, each louver blade 14 is of generally rectangular section with a flat square front edge 14a and a rounded rear edge 14b. The slots 18 are configured to match the profile of the blades 14 so that the ends of the blades 14 are a close fit in the slots 18 and can be secured in the slots 18 with a bonding agent such as a polymer/solvent based adhesive cement applied to all touching areas of the profiles. We prefer to use a liquid form of the styrene itself as the bonding agent as it has been found the resulting bond is stronger than the material itself. It will be understood that other bonding agents and/or methods of joining the blades 14 to the stiles 6,8 to construct the frame 4 may be employed.

The louver blades 14 are a push-fit the slots 18 and the rounded rear edge 14b of the blades 14 facilitates positioning of the ends of the blades 14 in the slots. The close fit of the ends of the blades 14 in the slots 18 also provides a neat and attractive finish.

The shutter 2 may have a decorative function only in which it is secured in a permanent fixed position to the wall of a building at the side of a window or door with the rear face against the wall and the front face directed outwards away from the wall. In this position, the inclination of the louver blades 14 downwards and the projection of the louver blades from the front face of the shutter 2 deflects water away from the wall.

Alternatively or additionally, the shutter 2 may have a functional and/or security function in which it is mounted at the side of a window or door for hinging movement about a vertical axis between an open position against the wall of the building and a closed position in which it overlies all or part of the window or door and can be secured to prevent or restrict access to the window or door from the outside, for example to prevent a thief gaining entry to the building.

The shutter 2 may be mounted so that the front face is against the wall in the open position and is directed outwards away from the window or door in the closed position. In this position, the inclination of the louver blades 14 downwards and the projection of the louver blades from the front face of the shutter 2 deflects water away from the window or door.

A pair of shutters may be provided, one on each side of the window or door that come together in the closed position to cover the window or door. Alternatively, a single shutter may be provided on one side only of the window or door that extends across and covers the window or door in the closed position.

It will be understood that the invention is not limited to the embodiment above-described. For example, the number and spacing and/or the inclination of the louver blades may be altered to meet customer requirements and/or to meet insurance requirements where the shutters are employed to provide a security function.

Moreover, the invention may be applied to different styles of shutters and includes shutters with or without ventilation openings. For example, the invention may be employed with shutters comprising a solid panel. Where provided, ventilation openings may be provided by louvers as described or by holes in a solid panel.

Furthermore, the invention may be employed with shutters mounted for hinging or sliding movement between open and closed positions. Hinged shutters may be side hung or top hung. Shutters can also be constructed with a central vertical stile to give a bi-fold or "Bahama" shutter appearance. All possible shutter constructions and styles are envisaged and within the scope of the invention.

While in the above-described embodiment, the invention has been described with reference to an external shutter, it will be understood that the invention could be applied to internal shutters where the colour and/or shape of shutter can be co-ordinated with the colour scheme and/or style of the room in which the shutter is provided.

Other applications and advantages of the invented shutter will be apparent to those skilled in the art.

## Claims

1. A shutter for a closure such as a door or window, wherein the shutter is made of a blown (expanded) polymer.

2. A shutter according to claim 1 wherein the shutter is made of extruded blown polystyrene having a specific gravity in the range 0.30 to 0.85.

3. A shutter according to claim 2 wherein the shutter comprises approximately 95% by weight of blown polystyrene.

4. A shutter according to claim 2 or claim 3 wherein the extruded blown polystyrene comprises a mixture of two or more grades of polystyrene,

5. A shutter according to claim 4 wherein the blown polystyrene comprises a mixture of high impact polystyrene and crystal polystyrene (also known as general purpose polystyrene) having a ratio of high impact polystyrene to crystal polystyrene in the range from 30:70 to 40:60 % by weight of the total polystyrene content.

6. A shutter according to any of claims 2 to 5 wherein the blown polystyrene includes a colouring agent.

7. A shutter according to any preceding claim comprising a frame of generally rectangular shape and a plurality of louver blades extending between opposed stiles of the frame, wherein the frame and blades are made of the same or different blown polymers and the ends of the blades are located and secured in slots in the inner side edge of the stiles that are configured to match the profile of the blades.

8. A method of constructing a shutter for a closure such as a door or window, comprising forming at least one profile of required shape from a blown polymer.

9. A method according to claim 8 wherein the at least one profile comprises an extrusion of uniform cross-section from which component parts of the shutter can be cut to length for assembly of shutters of different size.

10. A method according to claim 8 or claim 9 wherein the blown polymer is a mixture of at least two grades of blown polystyrene of different hardness for example a mixture of high impact polystyrene and crystal polystyrene having a ratio of high impact polystyrene to crystal polystyrene in the range from 30:70 to 40:60 % by weight of the total polystyrene content.
